# EUROPEAN PATENT APPLICATION

(11) **EP 4 389 350 A1**
(43) Date of publication of application: **26.06.2024**
(21) Application number: 22918456.9
(22) Date of filing: 27.12.2022
(51) Int. Cl.: B25B 11/00, H01M 50/264

(54) **BATTERY POSITIONING DEVICE, AND BATTERY POSITIONING METHOD**

(30) Priority: 05.01.2022 CN 202210010712
(71) Applicant: Contemporary Amperex Technology Co., Limited, Ningde City, Fujian 352100 (CN)
(72) Inventor: WEI, Wenchao, Ningde City, Fujian 352100 (CN); QIU, Kun, Ningde City, Fujian 352100 (CN); WU, Ying, Ningde City, Fujian 352100 (CN)
(74) Representative: Gong, Jinping
(86) International application number: PCT/CN2022/142525
(87) International publication number: WO 2023/131015

(57) **Abstract**

This application relates to a battery positioning apparatus and a battery positioning method. The battery includes a first grip surface and a second grip surface. Projections of the first grip surface and the second grip surface along a first direction do not overlap. The first direction is perpendicular to the first grip surface and the second grip surface. The battery positioning apparatus includes a pallet and a limiting mechanism. The pallet is configured to hold a battery. The limiting mechanism is disposed on the pallet and configured to release the first grip surface of the battery when the second grip surface of the battery is gripped along the first direction. In the battery positioning apparatus provided herein, the limiting mechanism is disposed to relieve pressure separately after limiting positions of the first grip surface and the second grip surface. In this way, the first grip surface and the second grip surface can be bundled separately by using a machine without manual bundling for the battery. This method improves the production efficiency of batteries, and also reduces the possibility of misalignment of internal components of the battery during the bundling, thereby improving structural stability of the manufactured battery, and in turn, increasing the service life of the battery.

## Description

### CROSS-REFERENCE TO RELATED APPLICATIONS

This application claims priority to Chinese Patent Application No. 202210010712.6, filed on January 5, 2022 and entitled "BATTERY POSITIONING APPARATUS AND BATTERY POSITIONING METHOD", which is incorporated herein by reference in its entirety.

### TECHNICAL FIELD

This application relates to the field of battery technology, and in particular, to a battery positioning apparatus and a battery positioning method.

### BACKGROUND

Batteries are widely used in electronic devices such as a mobile phone, a notebook computer, an electric power cart, an electric vehicle, an electric airplane, an electric ship, an electric toy car, an electric toy ship, an electric toy airplane, and an electric tool.

In a production process of batteries, how to ensure structural stability of a manufactured battery to improve the service life of the battery is an aspect to be continuously improved by a person skilled in the art.

### SUMMARY

This application provides a battery positioning apparatus and a battery positioning method to increase the service life of a battery.

According to a first aspect, an embodiment of this application provides a battery positioning apparatus, configured to grip a battery. The battery includes a first grip surface and a second grip surface. Projections of the first grip surface and the second grip surface along a first direction do not overlap. The first direction is perpendicular to the first grip surface and the second grip surface. The battery positioning apparatus includes: a pallet, configured to hold the battery; and a limiting mechanism, disposed on the pallet, and configured to release the first grip surface of the battery when the second grip surface of the battery is gripped along the first direction.

In the battery positioning apparatus according to this embodiment of this application, the limiting mechanism is disposed to release the first grip surface of the battery when gripping the second grip surface of the battery in the first direction. That is, the limiting mechanism relieves pressure on the two grip surfaces separately after limiting positions of the first grip surface and the second grip surface. In this way, the first grip surface and the second grip surface can be bundled separately by using a machine without manual bundling. This method improves the production efficiency of batteries, and also reduces the possibility of misalignment of internal components of the battery during the bundling, thereby improving structural stability of the manufactured battery, and in turn, increasing the service life of the battery.

In some embodiments, the limiting mechanism includes: a first limiting mechanism, configured to grip the first grip surface of the battery along the first direction; and a second limiting mechanism, configured to grip the second grip surface of the battery along the first direction, and configured to be able to grip the second grip surface when the first limiting mechanism releases the first grip surface. Such arrangement makes it convenient to grip the first grip surface and the second grip surface, and makes it convenient to relieve pressure for the first grip surface and the second grip surface stepwise, thereby simplifying the gripping and pressure relief operations for the battery in a process of bundling the battery.

In some embodiments, the battery positioning apparatus further includes a locking mechanism. The locking mechanism is configured to lock the second limiting mechanism so that the second limiting mechanism keeps a state of gripping the second grip surface. By disposing the locking mechanism, the first limiting mechanism and the second limiting mechanism can perform the gripping action on the first grip surface and the second grip surface respectively through the same driving apparatus. In addition, the pressure on the second grip surface is retained through the locking mechanism to implement stepwise pressure relief for the first grip surface and the second grip surface. Such arrangement is conducive to simplifying the overall structure of the battery positioning apparatus, and simplifying the operation steps on the battery positioning apparatus in a bundling process during production.

In some embodiments, the second limiting mechanism includes a locking portion. The locking mechanism includes: a limiting rack, configured to fit the locking portion to limit a displacement of a second position limiter along the first direction; and a lock driving assembly, configured to drive the limiting rack to move along a direction toward or away from the second limiting mechanism so that the limiting rack is in fit with or out of fit with the locking portion. In this way, for the batteries of different sizes along the first direction, the position of the second limiting mechanism can be limited through the fit between limiting teeth of the limiting rack and the locking portion, so as to grip the second grip surfaces of the batteries of different sizes, and improve adaptability of the battery positioning apparatus to products of different models.

In some embodiments, the lock driving assembly includes: a first fixing piece; a first elastomer, connected to the first fixing piece and the limiting rack; and a driving cylinder, configured to drive the limiting rack to move toward the second position limiter and cause the first elastomer to deform to store elastic potential energy. Such arrangement simplifies the structure of the lock driving assembly and also makes the movement of the limiting rack simpler.

In some embodiments, the first limiting mechanism includes a first position limiter and a position limiter driving assembly. The first position limiter is configured to grip the first grip surface. The position limiter driving assembly is configured to drive the first position limiter to move along the first direction. The second limiting mechanism is disposed on a side of the first position limiter, the side being close to the battery. The first position limiter drives at least a part of the second limiting mechanism to move along the first direction so that the second limiting mechanism grips the second grip surface. Such arrangement enables the first position limiter and the second limiting mechanism to grip the first grip surface and the second grip surface respectively through one position limiter driving assembly, thereby simplifying the structure of the battery positioning apparatus.

In some embodiments, the second limiting mechanism includes a second position limiter, a second elastomer, and a second fixing piece. The second elastomer is connected to the second position limiter and the second fixing piece. The first position limiter is configured to drive the second position limiter to move along the first direction and drive the second elastomer to deform to store elastic potential energy. Such arrangement further simplifies the overall structure of the battery positioning apparatus.

In some embodiments, the position limiter driving assembly includes a lead screw and a nut seat that fit each other. The lead screw is connected to the first position limiter. The lead screw is configured to rotate relative to the nut seat and cause the first position limiter to move along the first direction. Such arrangement improves the stability of the movement of the first position limiter and reduces the possibility that the first position limiter causes a relatively large impact load onto the battery.

In some embodiments, a helix angle of the lead screw is less than a static friction angle. Such arrangement enables self-locking of the lead screw that has moved into place.

In some embodiments, the pallet includes a movable supporting piece disposed at an edge of the pallet. The movable supporting piece is able to move at least along the first direction to vacate a space of the movable supporting piece, the space being opposite to the battery along a direction perpendicular to the first direction. The movable supporting piece improves the adaptability of the battery positioning apparatus to batteries of different sizes, and improves the equipment utilization rate of the battery positioning apparatus.

In some embodiments, the movable supporting piece includes two supporting subsegments disposed along the first direction. The battery positioning apparatus further includes an opening mechanism connected to the supporting subsegments. The opening mechanism is configured to drive the two supporting subsegments to move toward each other or away from each other along the first direction. Such arrangement makes it more convenient for an operator to operate the battery positioning apparatus.

In some embodiments, the battery positioning apparatus further includes a shaping pressurizing mechanism. The shaping pressurizing mechanism is configured to grip the battery along a third direction. The third direction is perpendicular to the first direction and perpendicular to a second direction. The battery is placed in the pallet along the second direction. In this way, the components inside the battery can be shaped along the third direction, thereby further reducing the risk of misalignment of the formed battery and improving the structural stability of the battery.

According to another aspect, an embodiment of this application provides a battery positioning method. The battery positioning method employs the battery positioning apparatus provided in any one of the above embodiments. The battery positioning method includes: placing the battery in the pallet; operating the limiting mechanism to grip the first grip surface and the second grip surface of the battery along the first direction; and operating the limiting mechanism to release the first grip surface.

In the battery positioning method provided in this embodiment of this application, due to the use of the battery positioning apparatus provided in any one of the above embodiments, pressure can be relieved for the first grip surface and the second grip surface of the battery separately, thereby making it convenient to bundle the battery by use of a machine and improving the bundling efficiency of the batteries. In addition, the risk of misalignment of the internal components of the bundled battery is relatively low, thereby improving the structural stability of the battery and subsequent operation safety.

In some embodiments, the battery positioning method further includes: disposing a first strap around the battery, where the first strap passes through the first grip surface.

In some embodiments, the limiting mechanism includes a first limiting mechanism and a second limiting mechanism. The first limiting mechanism is configured to grip the first grip surface along the first direction. The second limiting mechanism is configured to grip the second grip surface along the first direction. The step of operating the limiting mechanism to grip the first grip surface and the second grip surface of the battery along the first direction specifically includes: operating the first limiting mechanism to grip the first grip surface along the first direction and operating the second limiting mechanism to grip the second grip surface; and/or the step of operating the limiting mechanism to release the first grip surface includes: operating the first limiting mechanism to move so that the first limiting mechanism releases the first grip surface.

In some embodiments, the battery positioning apparatus further includes a locking mechanism. The locking mechanism is configured to lock the second limiting mechanism so that the second limiting mechanism keeps a state of gripping the second grip surface. Before the step of operating the first limiting mechanism to move so that the first limiting mechanism releases the first grip surface, the battery positioning method further includes: operating the locking mechanism to lock the second limiting mechanism.

In some embodiments, the battery positioning method further includes: operating the locking mechanism to unlock the second limiting mechanism so that the second limiting mechanism releases the second grip surface; and disposing a second strap around the battery, where the second strap passes through the second grip surface.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a battery positioned by a battery positioning apparatus according to an embodiment of this application;
FIG. 2 is a front view of a battery positioning apparatus in which batteries are in place according to an embodiment of this application;
FIG. 3 is a schematic structural diagram of a battery positioning apparatus in which batteries are in place according to an embodiment of this application;
FIG. 4 is a front view of a battery positioning apparatus in which batteries are in place according to another embodiment of this application;
FIG. 5 is a schematic structural diagram of a battery positioning apparatus in which batteries are in place according to another embodiment of this application;
FIG. 6 is a schematic structural diagram of a battery positioning apparatus according to an embodiment of this application;
FIG. 7 is a top view of a battery positioning apparatus according to an embodiment of this application;
FIG. 8 is a schematic structural diagram of a battery positioning apparatus according to another embodiment of this application;
FIG. 9 is a top view of a battery positioning apparatus according to another embodiment of this application;
FIG. 10 is a top view of a battery positioning apparatus according to still another embodiment of this application;
FIG. 11 is a top view of a battery positioning apparatus according to yet another embodiment of this application;
FIG. 12 is a flowchart of a battery positioning method according to an embodiment of this application;
FIG. 13 is a flowchart of a battery positioning method according to another embodiment of this application;
FIG. 14 is a flowchart of a battery positioning method according to still another embodiment of this application;
FIG. 15 is a flowchart of a battery positioning method according to yet another embodiment of this application; and
FIG. 16 is a flowchart of a battery positioning method according to yet another embodiment of this application.

The drawings are not necessarily drawn to scale.

### List of reference numerals:

10. battery; 10a. first grip surface; 10b. second grip surface;
20. strap; 30. battery cell;
40. battery positioning apparatus; 41. pallet; 411. movable supporting piece; 4111. supporting subsegment; 42. limiting mechanism; 421. first limiting mechanism; 4211. first position limiter; 4212. position limiter driving assembly; 42121. nut seat; 42122. lead screw; 422. second limiting mechanism; 422a. locking portion; 4221. second position limiter; 4222. second elastomer; 4223. second fixing piece; 43. locking mechanism; 431. limiting rack; 432. lock driving assembly; 4321. first elastomer;
X. first direction; Y second direction; Z. third direction

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

It is hereby noted that, unless otherwise specified, the technical terms or scientific terms used in embodiments of this application bear the meanings commonly understood by a person skilled in the technical field of embodiments of this application.

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In addition, the technical terms such as "first" and "second" are used merely for ease of description, but not to indicate or imply relative importance or implicitly specify the number of technical features mentioned. In the description of the embodiments of this application, unless otherwise expressly specified, "a plurality of" means two or more.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

In the description of embodiments of this application, unless otherwise expressly specified and defined, a first feature being "on" or "under" a second feature may mean that the first feature is in direct contact with the second feature, or the first feature is in indirect contact with the second feature through an intermediary. In addition, a first feature being "on", "above", or "over" a second feature may be that the first feature is exactly above or obliquely above the second feature, or simply that the first feature is at an altitude higher than the second feature. A first feature being "under", "below", or "beneath" a second feature may be that the first feature is exactly under or obliquely under the second feature, or simply that the first feature is at an altitude lower than the second feature.

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell. The battery cell may be in various shapes such as cylindrical, flat, cuboidal or other shapes. The embodiments of this application do not limit the shape of the battery cell. Depending on the form of packaging, the battery cell is typically classed into three types: cylindrical battery cell, prismatic battery cell, and pouch-type battery cell, without being limited in embodiments of this application.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

The battery includes a plurality of battery cells arranged in sequence. To fix the battery cells, two end plates and a strap are disposed on the battery. The two end plates are disposed at two ends of the plurality of battery cells respectively along an arrangement direction. The strap surrounds an entirety of the end plates and the battery cells to fix the end plates and the battery cells.

The inventor hereof finds that, during bundling of the battery (that is, in a process of applying a strap), the internal structures of the battery are prone to be misaligned with each other. After finding that the problems such as the proneness of the internal structures of the bundled battery to misalignment, the inventor systematically analyzes and researches the bundling technique of the battery and the related apparatus. The inventor finds that the strap is wrapped around the battery for one circle to implement the bundling, during which the battery is unable to be gripped by using a machine. The battery is usually bundled manually, so that during bundling of the battery, the battery is gripped manually to shape the internal components of the battery and minimize the misalignment between the internal components of the battery. However, the manual bundling of the battery is inefficient, and still incurs a risk of misalignment between the internal components of the battery.

In view of the foregoing problem found by the inventor, the inventor has improved the structure of the battery positioning apparatus. The technical solutions described in some embodiments of this application are applicable to a battery positioning apparatus and a method for positioning a battery by using the battery positioning apparatus.

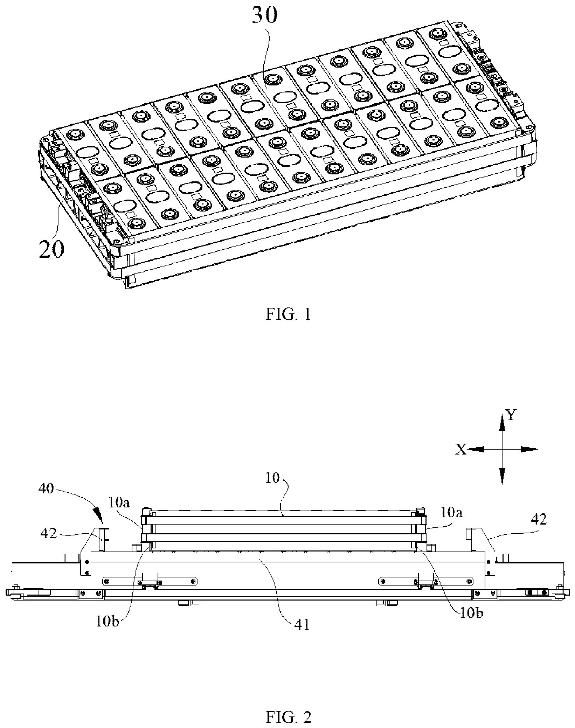

As shown in FIG. 1, a battery 10 includes stacked battery cells 30 and a strap 20 disposed around the battery cells 30. The strap 20 may be of different types. As an example, the straps 20 may include a steel strap and a nylon strap. In the process of applying the strap 20 to the battery 10, the battery 10 needs to be well positioned to prevent wobbling of the battery cells 30 and misalignment between the battery cells 30 and end plates during bundling of the battery 10. The wobbling and misalignment impair overall structural stability of the bundled battery 10.

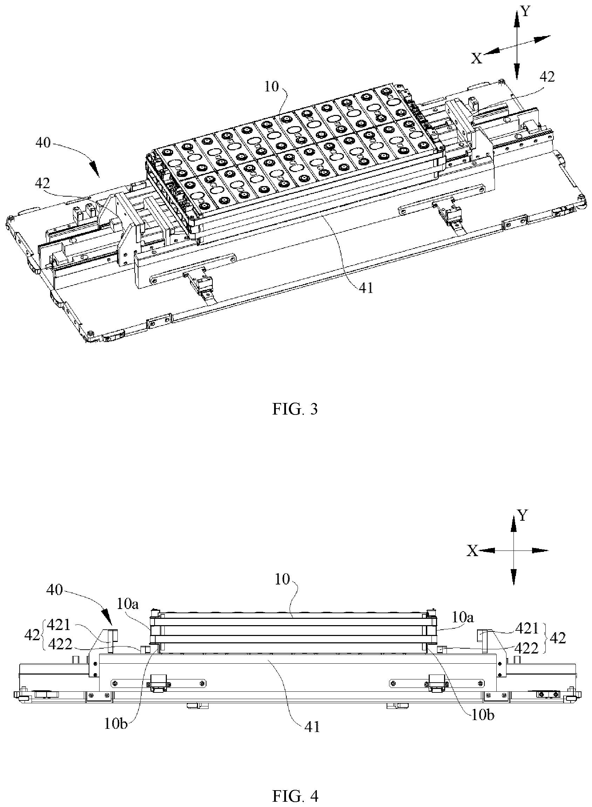

FIG. 2 and FIG. 3 are a front view and a schematic structural diagram, respectively, of a battery positioning apparatus 40 in which batteries 10 are in place according to an embodiment of this application...;
As shown in FIG. 2 and FIG. 3, a battery positioning apparatus 40 is provided in an embodiment of this application. The battery positioning apparatus 40 is configured to grip a battery 10. The battery 10 includes a first grip surface 10a and a second grip surface 10b. Projections of the first grip surface 10a and the second grip surface 10b along a first direction X do not overlap. The first direction X is perpendicular to the first grip surface 10a and the second grip surface 10b. The battery positioning apparatus 40 includes a pallet 41 and a limiting mechanism 42. The pallet 41 is configured to hold the battery 10. The limiting mechanism 42 is disposed on the pallet 41 and configured to release the first grip surface 10a of the battery 10 when the second grip surface 10b of the battery 10 is gripped along the first direction X.

Optionally, the battery 10 is placed on the pallet 41 along the second direction Y The first direction X may be perpendicular to the second direction Y As an example, the second direction Y is a plumb direction, and the first direction X is a horizontal direction.

The projections of the first grip surface 10a and the second grip surface 10b of the battery 10 do not overlap along the first direction X, that is, at least a part of the projections of the first grip surface 10a and the second grip surface 10b does not overlap along the first direction X, and there may be no overlap between the projections at all. In other words, the projections of the first grip surface and the second grip surface in the first direction X are contiguous or spaced apart. Alternatively, there may be a partial overlap, but not complete overlap. In this way, when gripping the first grip surface 10a and the second grip surface 10b along the first direction X, the limiting mechanism 42 just needs to grip a part of the first grip surface and a part of the second grip surface, the projections of the two parts in the first direction X being not overlapped.

The first grip surface 10a and the second grip surface 10b may be distributed in the same plane perpendicular to the first direction X or in different planes perpendicular to the first direction X. The distribution is not limited herein, and may be set based on the specific structure of the battery 10.

As a load-bearing component of the battery 10, the pallet 41 is not limited in structural form, as long as the structure can withstand the gravity of the battery 10 without affecting the subsequent bundling process of the battery 10. As an example, the pallet 41 may be a flat face or a stepped face formed in a plate shape or a block shape, or may be a structure formed by a combination of strips and containing a load-bearing flat face or load-bearing stepped face.

When the limiting mechanism 42 approaches the battery 10 along the first direction X, the limiting mechanism 42 may grip the first grip surface 10a and the second grip surface 10b concurrently to shape the to-be-bundled battery 10 along the first direction X. When the limiting mechanism 42 relieves pressure in the battery 10, the pressure of the first grip surface 10a may be released first while maintaining the gripped state of the second grip surface 10b.

When the limiting mechanism 42 relieves pressure on the first grip surface 10a while maintaining the gripped state of the second grip surface 10b, the battery 10 does not need to be additionally gripped because the limiting mechanism 42 is already gripping the second grip surface 10b. In this case, the battery 10 can be bundled by using a machine. Because the first grip surface 10a is not gripped, the strap may be wrapped around the battery 10 and pass through the first grip surface 10a. Such arrangement avoids the trouble of bundling the battery 10 while gripping the battery 10 manually. During bundling of the battery 10, the possibility of misalignment of the internal components of the battery 10 is reduced, and the structural stability of the processed battery 10 is improved.

After the first grip surface 10a is bundled, the winding first strap limits the position of the battery 10 to some extent. In this case, the limiting mechanism 42 can relieve pressure on the second grip surface 10b, and the battery 10 can be bundled with a strap by a machine by virtue of the position limit effect exerted by the first strap on the battery 10, with the strap passing through the second grip surface 10b. In this way, after being bundled twice, the battery 10 is bundled effectively. In addition, during the bundling, the risk of misalignment of the internal components of the battery 10 is reduced effectively.

In the battery positioning apparatus 40 according to this embodiment of this application, the limiting mechanism 42 is disposed to release the first grip surface 10a of the battery 10 when gripping the second grip surface 10b of the battery 10 in the first direction X. That is, the limiting mechanism 42 relieves pressure on the two grip surfaces separately after limiting positions of the first grip surface 10a and the second grip surface 10b. In this way, the first grip surface 10a and the second grip surface 10b can be bundled separately by using a machine, thereby improving the production efficiency of the battery 10, and at the same time, reducing the possibility of misalignment of the internal components of the battery 10 during the bundling, improving the structural stability of the manufactured battery 10, and increasing the service life of the battery 10.

The specific structure of the limiting mechanism 42 is not limited, as long as the structure can grip the first grip surface 10a and the second grip surface 10b and relieve pressure on the first grip surface 10a and the second grip surface 10b separately. Optionally, the limiting mechanism 42 may be a mechanism combined organically to implement gripping of the first grip surface 10a and the second grip surface 10b and implement stepwise pressure relief on the first grip surface 10a and the second grip surface 10b by controlling the movement of the internal components in relation to each other. In addition, the limiting mechanism 42 may include two independent mechanisms that independently actuate the gripping and pressure relief actions for the first grip surface 10a and the second grip surface 10b. The limiting mechanism 42 may further include two interrelated mechanisms. Specifically, the two mechanisms may be driven by the same driving mechanism to grip the first grip surface 10a and the second grip surface 10b respectively. In a case of pressure relief, the two mechanisms relieve pressure on the first grip surface 10a and the second grip surface 10b respectively by control of the driving mechanism.

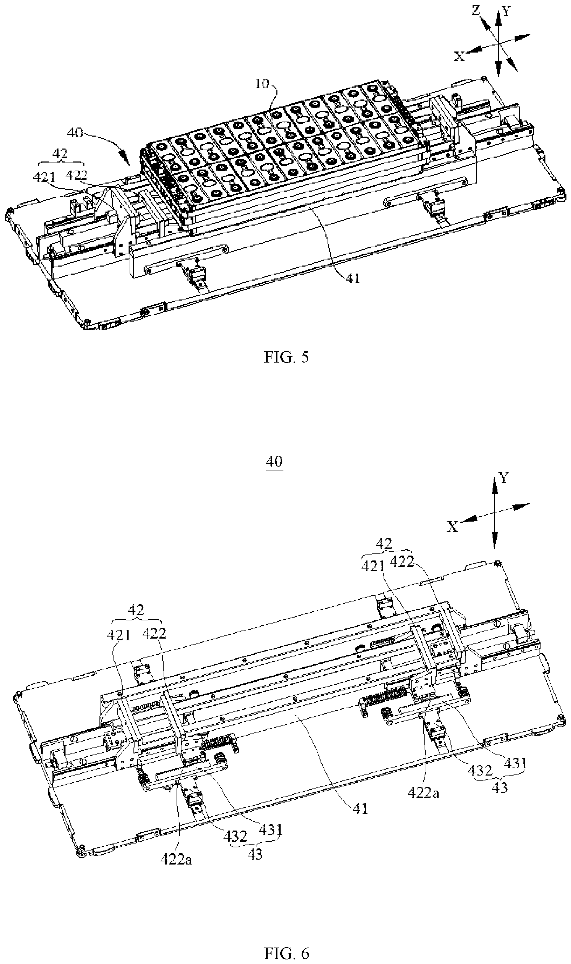

In some optional embodiments, as shown in FIG. 4 and FIG. 5, the limiting mechanism 42 includes a first limiting mechanism 421 and a second limiting mechanism 422. The first limiting mechanism 421 is configured to grip the first grip surface 10a of the battery 10 along the first direction X. The second limiting mechanism 422 is configured to grip the second grip surface 10b along the first direction X. The second limiting mechanism 422 is configured to be able to grip the second grip surface 10b when the first limiting mechanism 421 releases the first grip surface 10a.

Specifically, the first limiting mechanism 421 and the second limiting mechanism 422 may grip the first grip surface 10a and the second grip surface 10b synchronously or asynchronously, respectively. When the first limiting mechanism 421 relieves pressure on the first grip surface 10a, the second gripping mechanism is still able to retain the pressure. That is, when the first limiting mechanism 421 releases the first grip surface 10a, the second limiting mechanism 422 is still able to grip the second grip surface 10b.

Specifically, the first limiting mechanism 421 and the second limiting mechanism 422 may be driven by the same driving mechanism to grip the first grip surface 10a and the second grip surface 10b respectively. Alternatively, the first grip surface 10a and the second grip surface 10b may be disposed to grip and pressurize the first grip surface 10a and the second grip surface 10b respectively. Both methods can achieve the purpose of stepwise pressure relief for the first grip surface 10a and the second grip surface 10b, so that the battery 10 can be bundled by a machine, with the strap passing through the first grip surface 10a and the second grip surface 10b.

Understandably, by disposing the limiting mechanism 42 including the first limiting mechanism 421 and the second limiting mechanism 422, it is convenient to grip the first grip surface 10a and the second grip surface 10b, and it is convenient to relieve pressure for the first grip surface 10a and the second grip surface 10b stepwise, thereby simplifying the gripping and pressure relief operations for the battery in a process of bundling the battery.

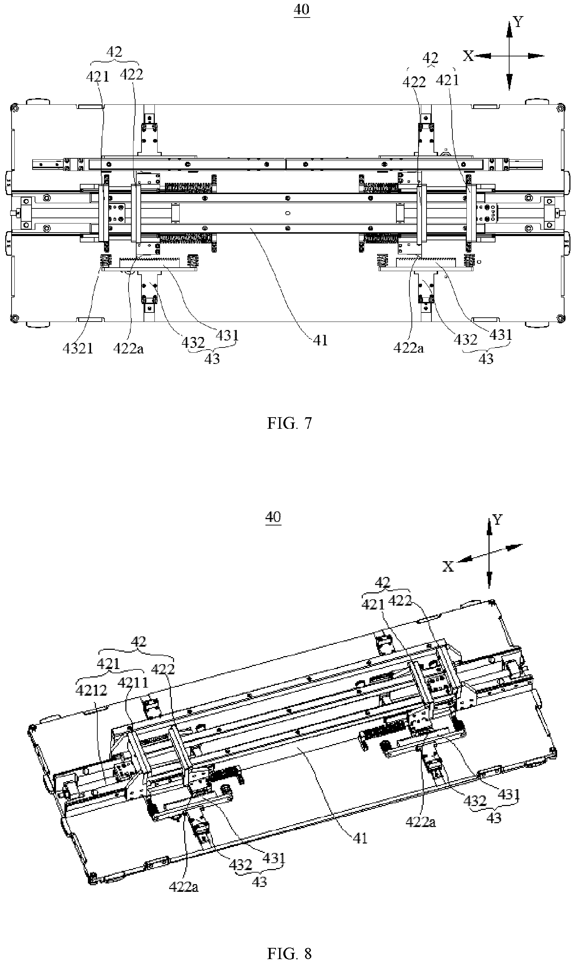

In some optional embodiments, as shown in FIG. 6 and FIG. 7, the battery positioning apparatus 40 further includes a locking mechanism 43. The locking mechanism 43 is configured to lock the second limiting mechanism 422 so that the second limiting mechanism 422 keeps a state of gripping the second grip surface 10b.

Specifically, the second limiting mechanism 422 may be disposed between the battery 10 and the first limiting mechanism 421. When a driving apparatus drives the first limiting mechanism 421 to move toward the battery 10 to grip the first grip surface 10a, the second limiting mechanism 422 moves toward the battery 10 along with the first limiting mechanism 421 under a thrust force of the first limiting mechanism 421, so as to grip the second grip surface 10b. After the second limiting mechanism 422 grips the second grip surface in place, the locking mechanism 43 locks the second limiting mechanism 422 so that the second limiting mechanism 422 keeps the gripped state of the second grip surface 10b. At this time, the second limiting mechanism 422 no longer needs the thrust force of the first limiting mechanism 421. The driving apparatus may drive the first limiting mechanism 421 to release the first grip surface 10a to relieve pressure on the first grip surface 10a while maintaining pressure on the second grip surface 10b. After the battery 10 is bundled with a strap passing through the first grip surface 10a, the locking mechanism 43 is released, and the second limiting mechanism 422 is restored to the original position to complete pressure relief for the second grip surface 10b.

Understandably, by disposing the locking mechanism 43, the first limiting mechanism 421 and the second limiting mechanism 422 can perform the gripping action on the first grip surface 10a and the second grip surface 10b respectively through the same driving apparatus. In addition, the pressure on the second grip surface 10b is retained through the locking mechanism 43 to implement stepwise pressure relief for the first grip surface 10a and the second grip surface 10b. Such arrangement is conducive to simplifying the overall structure of the battery positioning apparatus 40, and simplifying the operation steps on the battery positioning apparatus 40 in a bundling process during production.

The specific structure of the locking mechanism 43 is not limited, as long as the structure can exert a position limit effect on the second limiting mechanism 422 to enable the second limiting mechanism 422 to retain pressure on the second grip surface 10b.

In some optional embodiments, the second limiting mechanism 422 includes a locking portion 422a. The locking mechanism 43 includes a limiting rack 431 and a lock driving assembly 432. The limiting rack 431 is configured to fit the locking portion 422a to limit a displacement of the second limiting mechanism 422 along the first direction X. The lock driving assembly 432 is configured to drive the limiting rack 431 to move along a direction toward or away from the second limiting mechanism 422 so that the limiting rack 431 is in fit with or out of fit with the locking portion 422a.

Specifically, the locking portion 422a may assume a toothed shape that fits the toothed shape of the limiting rack 431. In the state of gripping the second grip surface 10b by the second limiting mechanism 422, the lock driving assembly 432 drives the limiting rack 431 to move toward the second limiting mechanism 422, so that the limiting rack 431 fits the locking portion 422a of the second position limiter 4221. The limiting rack 431 keeps in fit with the position limiter so that the second position limiter maintains the gripped state of the second grip surface 10b. At this time, the pressure on the first limiting mechanism 421 is relieved, and the first limiting mechanism 421 releases the first grip surface 10a while the second grip surface 10b keeps the gripped state, without affecting the second grip surface 10b.

Understandably, the second limiting mechanism 422 includes a locking portion 422a, the locking mechanism 43 includes a limiting rack 431, and the position of the second limiting mechanism 422 is limited through the fit between the locking portion 422a and the limiting rack 431. The limiting rack 431 includes a plurality of limiting teeth. Therefore, for the batteries 10 of different sizes along the first direction X, the position of the second limiting mechanism 422 can be limited through the fit between limiting teeth of the limiting rack 431 and the locking portion 422a, so as to grip the second grip surfaces 10b of the batteries 10 of different sizes, and improve adaptability of the battery positioning apparatus 40 to products of different models.

In some other optional embodiments, the form of fit between the second limiting mechanism 422 and the locking mechanism 43 may be a slot-and-stopper fit. Alternatively, the locking mechanism 43 alone is disposed to grip the second limiting mechanism 422 along the first direction X. Both forms of fit enable the locking mechanism 43 to limit the position of the second limiting mechanism 422.

The lock driving assembly 432 may be a motor, such as a servomotor, or a stepper motor. The forward and reverse rotation of the motor drives the limiting rack 431 to move along a direction toward or away from the second limiting mechanism 422. Alternatively, the lock driving mechanism may be a structure such as a cylinder. The telescopic movement of the cylinder drives the limiting rack 431 to move along the direction toward or away from the second limiting mechanism 422. Alternatively, the lock driving mechanism just unidirectionally drives the limiting rack 431 to move toward the second limiting mechanism 422, and the limiting rack 431 is restored to the original position through an elastic force or an external force. All of the above arrangements enable the locking mechanism 43 to lock or unlock the second limiting mechanism 422.

In some optional embodiments, the lock driving assembly 432 includes a driving cylinder. The limiting rack 431 and a piston rod of the driving cylinder may be arranged to enable the locking mechanism 43 to lock or unlock the second limiting mechanism 422 through the telescopic movement of the piston rod.

In some other embodiments, the lock driving assembly 432 further includes a first fixing piece and a first elastomer 4321. The first elastomer 4321 is connected to the first fixing piece and the limiting rack 431. The driving cylinder is configured to drive the limiting rack 431 to move toward the second mechanism and cause the first elastomer 4321 to deform to store elastic potential energy.

Specifically, when the piston rod of the driving cylinder extends in motion, the limiting rack 431 is driven to move toward the second limiting mechanism 422, and the first elastomer 4321 deforms under the action of the limiting rack 431 and stores the elastic potential energy. When the piston rod of the driving cylinder is restored to the original position, the elastic potential energy of the first elastomer 4321 is released, thereby driving the limiting rack 431 back to the original position to release the second limiting mechanism 422.

The deformation of the first elastomer 4321 may be a tensile deformation or a compressive deformation. As an example, the first fixing piece may be disposed on the pallet 41. In this case, a compressive deformation of the first elastomer 4321 occurs when the piston rod of the driving cylinder drives the limiting rack 431 to move toward the second position limiter 4221. Alternatively, the first fixing piece may be disposed on the locking mechanism 43 such as a cylinder barrel of the driving cylinder. In this case, a tensile deformation of the first elastomer 4321 occurs when the piston rod of the driving cylinder drives the limiting rack 431 to move toward the second position limiter 4221.

The first elastomer 4321 may be a spring, rubber, or another structure, and the structural form of the first elastomer is not limited herein.

Understandably, the technical solution in which the lock driving mechanism includes the first elastomer 4321 can simplify the structure of the lock driving assembly 432 and also make the movement of the limiting rack 431 simpler.

In some embodiments, as shown in FIG. 8, the first limiting mechanism 421 includes a first position limiter 4211 and a position limiter driving assembly 4212. The first position limiter 4211 is configured to grip the first grip surface 10a, and the position limiter driving assembly 4212 is configured to drive the first position limiter 4211 to move along the first direction X. The second limiting mechanism 422 is disposed on a side of the first position limiter 4211, the side being close to the battery 10. The first position limiter 4211 drives at least a part of the second limiting mechanism 422 to move along the first direction X so that the second limiting mechanism 422 grips the second grip surface 10b.

In other words, because the second limiting mechanism 422 is disposed on a side of the first position limiter 4211 and the side is close to the battery 10, when the position limiter driving assembly 4212 drives the first position limiter 4211 to move toward the battery 10 to grip the first grip surface 10a, the second limiting mechanism 422 is driven by the first position limiter 4211 to also move toward the battery 10 to grip the second grip surface 10b. After the second limiting mechanism 422 is locked by the locking mechanism 43, the first position limiter 4211 can be restored to the original position through a restoration movement of a position limiter driving mechanism, so as to release the gripping for the first grip surface 10a. At this time, the second limiting mechanism 422 still keeps gripping the second grip surface 10b due to the locking effect of the locking mechanism 43, thereby relieving pressure for the first grip surface 10a while maintaining pressure on the second grip surface 10b.

Such arrangement enables the first position limiter 4211 and the second limiting mechanism 422 to grip the first grip surface 10a and the second grip surface 10b respectively through one position limiter driving assembly 4212, thereby simplifying the structure of the battery positioning apparatus 40.

After the first grip surface 10a is bundled, the locking mechanism 43 is unlocked, and the second limiting mechanism 422 is restored to the original position. The second limiting mechanism 422 may be restored to the original position with the aid of an external force such as human power. Alternatively, a corresponding restorage driving mechanism may be disposed to drive the second limiting mechanism 422 back into the original position after the locking mechanism 43 is unlocked.

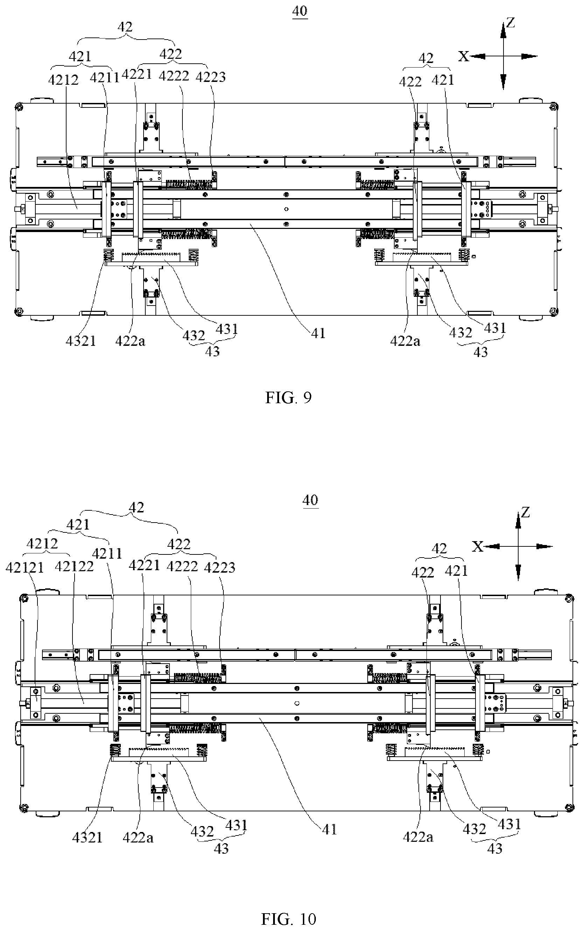

In some optional embodiments, as shown in FIG. 9, the second limiting mechanism 422 includes a second position limiter 4221, a second elastomer 4222, and a second fixing piece 4223. The second elastomer 4222 is connected to the second position limiter 4221 and the second fixing piece 4223. The first position limiter 4211 is configured to drive the second position limiter 4221 to move along the first direction X and drive the second elastomer 4222 to deform to store elastic potential energy.

Specifically, the second position limiter 4221 moves toward the battery 10 under the thrust force of the first position limiter 4211. In this process, the second position limiter 4221 drives the second elastomer 4222 to deform to store the elastic potential energy. The second position limiter 4221 maintains the gripped state of the second grip surface 10b under the locking action of the locking mechanism 43. At the same time, the stored elastic potential energy of the second elastomer 4222 is retained. After the locking mechanism 43 is unlocked, the elastic potential energy of the second elastomer 4222 is released, and the second position limiter 4221 is restored to the original position under the action of the second elastomer 4222.

When the second elastomer 4222 deforms to store the elastic potential energy, a tensile deformation or a compressive deformation may occur. The type of the deformation is not limited herein. As an example, the second fixing piece 4223 is disposed on the pallet 41 on a side of the second position limiter 4221, the side being close to the battery 10. In this case, the second elastomer 4222 incurs a compressive deformation when the second position limiter 4221 moves toward the battery 10.

The second elastomer 4222 may be a spring, rubber, or another structure, and the structural form of the first elastomer is not limited herein.

Understandably, the second limiting mechanism 422 includes the second elastomer 4222 and the second position limiter 4221, and the second position limiter 4221 is restored to the original position through the elastic potential energy stored in the second elastomer 4222, without the need to dispose a special-purpose restoration driving mechanism, thereby simplifying the overall structure of the battery positioning apparatus 40.

In some embodiments, as shown in FIG. 10, the position limiter driving assembly 4212 includes a lead screw 42122 and a nut seat 42121 that fit each other. The lead screw 42122 is connected to the first position limiter 4211. The lead screw 42122 is configured to rotate relative to the nut seat 42121 and cause the first position limiter 4211 to move along the first direction X.

Through the fit between the lead screw 42122 and the nut seat 42121, the rotation movement of the lead screw 42122 is converted into a rectilinear movement of the first position limiter 4211, thereby improving the stability of the movement of the first position limiter 4211, making it convenient to control a grip force exerted by the first position limiter 4211 on the first grip surface 10a of the battery 10, and reducing the possibility that the first position limiter 4211 causes a relatively large impact load onto the battery 10.

To maintain the grip force exerted by the first limiting mechanism 421 on the first grip surface 10a after the lead screw 42122 has moved into place, it is necessary to avoid the phenomenon that the lead screw 42122 reverses automatically and fails to form an effective grip force on the first grip surface 10a. A separate locking mechanism may be disposed to prevent phenomena such as unnecessary reversal or slippage of the lead screw 42122.

In some optional embodiments, a helix angle of the lead screw 42122 is less than a static friction angle.

Therefore, after the first limiting mechanism 421 moves into place in the direction toward the battery 10, the lead screw 42122 can be self-locked without a need to dispose a locking apparatus for the lead screw 42122, thereby reducing the possibility that the lead screw 42122 automatically reverses and fails to form an effective grip force on the first grip surface 10a.

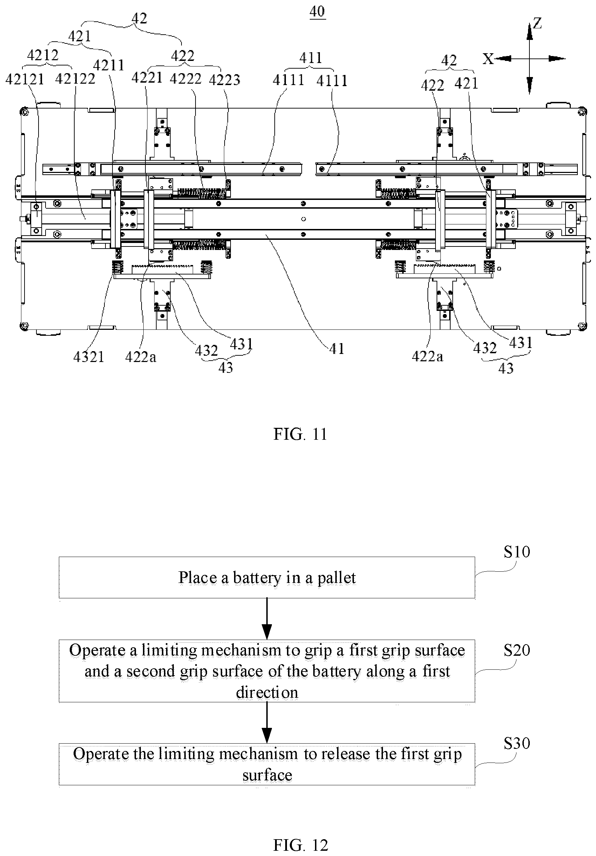

In some embodiments, as shown in FIG. 11, the pallet 41 includes a movable supporting piece 411 disposed at an edge of the pallet 41. The movable supporting piece 411 is able to move at least along the first direction X to vacate a space of the movable supporting piece 411, the space being opposite to the battery 10 along a direction perpendicular to the first direction X.

Understandably, during bundling of the battery 10, the bundling apparatus usually needs to be put in close proximity to the battery 10 in order to implement the bundling. Different batteries 10 usually vary in size, especially, in dimension of the battery 10 in a direction perpendicular to the first direction X. If the size of the battery 10 is relatively small, the bundling apparatus is unable to bundle the battery 10 due to blockage by the pallet 41 when the battery 10 is placed on the pallet 41. In a case that the pallet 41 includes a movable supporting piece 411 disposed at the edge of the pallet 41, the movable supporting piece 411 is able to move along the first direction X to vacate the space of the movable supporting piece 411 when the size of the battery 10 is relatively small, the space being opposite to the battery 10 along the direction perpendicular to the first direction X, thereby facilitating the bundling of the battery 10. When the battery 10 is in relatively large size and needs to be supported by a movable supporting piece 411, the movable supporting piece 411 can be utilized to carry the battery 10 normally.

Therefore, the movable supporting piece 411 improves the adaptability of the battery positioning apparatus 40 to batteries 10 of different sizes, and improves the equipment utilization rate of the battery positioning apparatus 40.

The movable supporting piece 411 may be formed in one piece, or may include a plurality of subsegments, without being limited herein. The movement of the movable supporting piece 411 along the first direction X may be implemented manually or by a corresponding driving mechanism.

In some embodiments, the movable supporting piece 411 includes two supporting subsegments 4111 disposed along the first direction X. The battery positioning apparatus 40 includes an opening mechanism connected to the supporting subsegments 4111. The opening mechanism is configured to drive the two supporting subsegments 4111 to move toward each other or away from each other along the first direction X.

Specifically, when the size of the battery 10 is relatively small, the opening mechanism is arranged to cause the two supporting subsegments 4111 to move away from each other, so as to vacate a space of the movable supporting piece 411, the space being opposite to the battery 10 along a direction perpendicular to the first direction X. When the size of the battery 10 is relatively large, the opening mechanism is controlled to drive the two supporting subsegments 4111 to move toward each other, so as to support the battery 10.

Therefore, the movable supporting piece 411 is arranged to include two supporting subsegments 4111, and the opening mechanism is arranged to control the two supporting subsegments 4111 to move toward each other or away from each other, thereby facilitating operations of an operator.

In some embodiments, the battery positioning apparatus 40 further includes a shaping pressurizing mechanism. The shaping pressurizing mechanism is configured to grip the battery 10 along a third direction Z. The third direction Z is perpendicular to the first direction X and perpendicular to a second direction Y The battery 10 is placed in the pallet 41 along the second direction Y.

Because the limiting mechanism 42 grips the battery 10 along the first direction X, the limiting mechanism 42 shapes the battery 10 along the first direction X. Subsequently, in some embodiments, the battery 10 also needs to be shaped along the third direction Z to achieve neat alignment between end faces of the components inside the battery 10 along the third direction Z.

Therefore, the shaping and pressurizing mechanism can shape the components inside the battery 10 along the third direction Z, thereby further reducing the risk of misalignment of the formed battery 10 and improving the structural stability of the battery 10.

FIG. 12 is a flowchart of a battery positioning method according to an embodiment of this application.

As shown in FIG. 12, the battery positioning method according to this embodiment of this application employs the battery positioning apparatus 40 provided in any one of the foregoing embodiments. The battery positioning method includes the following steps:
S 10. Placing a battery 10 in a pallet 41.
S20. Operating a limiting mechanism 42 to grip a first grip surface 10a and a second grip surface 10b of the battery 10 along a first direction X. In this way, the battery 10 can be shaped along the first direction X.
S30. Operating the limiting mechanism 42 to release the first grip surface 10a. In this step, the limiting mechanism 42 relieves pressure on the first grip surface 10a while maintaining the grip force on the second grip surface 10b, thereby making it convenient to bundle the battery 10 by using a bundling machine.

In the battery bundling method provided in this embodiment of this application, due to the use of the battery positioning apparatus 40 provided in any one of the above embodiments, pressure can be relieved for the first grip surface 10a and the second grip surface 10b of the battery 10 separately, thereby making it convenient to bundle the battery 10 by use of a machine and improving the bundling efficiency of the battery 10. In addition, the risk of misalignment of the internal components of the bundled battery 10 is relatively low, thereby improving the structural stability of the battery 10 and subsequent operation safety.

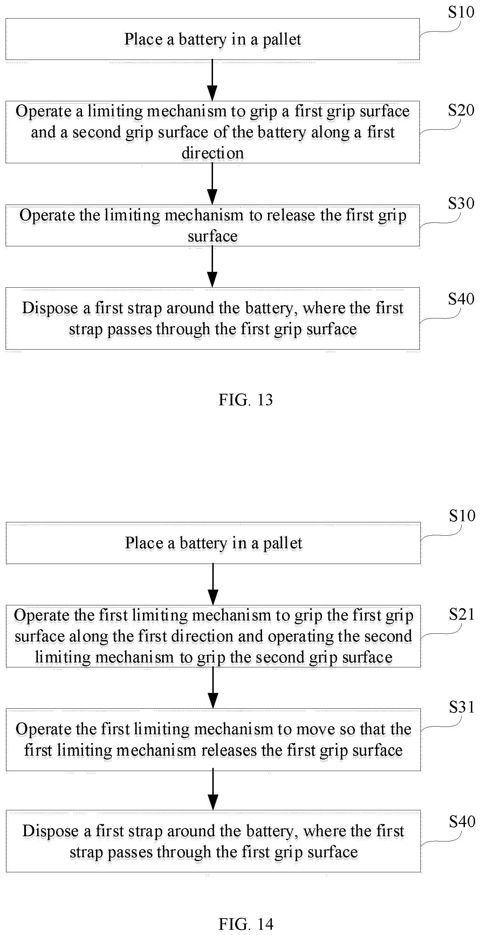

In some optional embodiments, as shown in FIG. 13, the battery 10 positioning method further includes:
S40. Disposing a first strap around the battery 10, where the first strap passes through the first grip surface 10a.

The first strap so formed can exert a position limit effect on the battery 10. At this time, the limiting mechanism 42 may releases the grip of the second grip surface 10b.

In some embodiments, the limiting mechanism 42 includes a first limiting mechanism 421 and a second limiting mechanism 422. The first limiting mechanism 421 is configured to grip the first grip surface 10a along the first direction X. The second limiting mechanism 422 is configured to grip the second grip surface 10b along the first direction X. FIG. 14 is a flowchart of a battery positioning method according to another embodiment of this application.

The step S20 "operating a limiting mechanism 42 to grip a first grip surface 10a and a second grip surface 10b of the battery 10 along a first direction X" specifically includes:
S21. operating a first limiting mechanism 421 to grip the first grip surface 10a along the first direction X, and operating the second limiting mechanism 422 to grip the second grip surface 10b. In other words, the first limiting mechanism 421 grips the first grip surface, and the second limiting mechanism grips the second grip surface 10b, thereby facilitating stepped pressure relief for the first grip surface 10a and the second grip surface 10b.

The step S30 "operating the limiting mechanism 42 to release the first grip surface 10a" includes:
S31. operating the first limiting mechanism 421 to move so that the first limiting mechanism 421 releases the first grip surface 10a. In this way, pressure is relieved for the first grip surface 10a while maintaining the grip force exerted by the second limiting mechanism 422 on the second grip surface 10b, thereby making it convenient to bundle the battery 10 with a first strap subsequently.

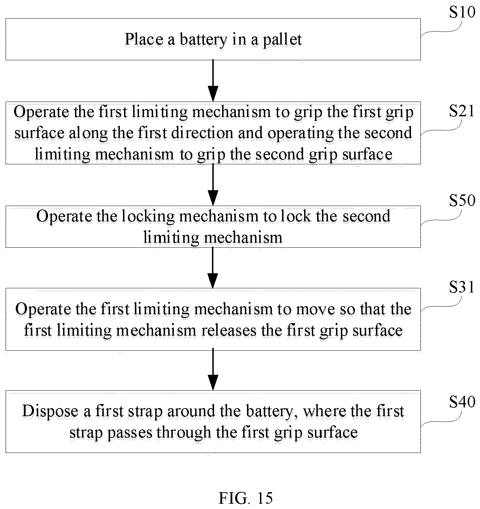

In some embodiments, the battery positioning apparatus 40 further includes a locking mechanism 43. The locking mechanism 43 is configured to lock the second limiting mechanism 422 so that the second limiting mechanism 422 keeps a state of gripping the second grip surface 10b. As shown in FIG. 15, before the step S31 "operating the first limiting mechanism 421 to move so that the first limiting mechanism 421 releases the first grip surface 10a", the battery bundling method further includes:
S50. operating the locking mechanism 43 to lock the second limiting mechanism 422.

That the locking mechanism 43 locks the second limiting mechanism 422 is conducive to maintaining the grip effect exerted by the second limiting mechanism 422 on the second grip surface 10b.

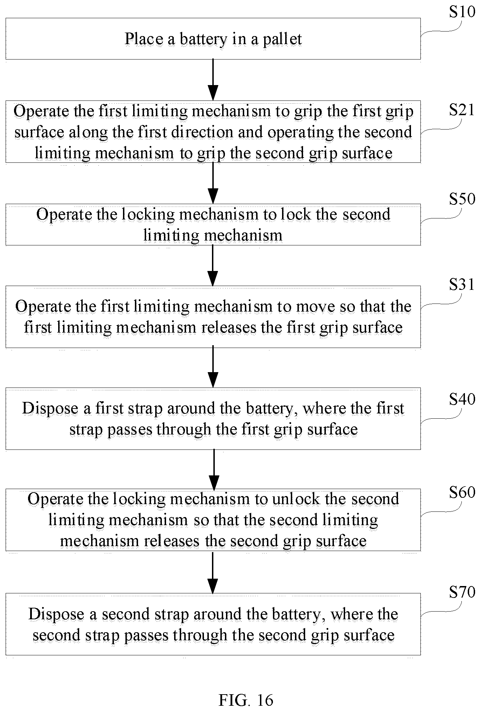

In some embodiments, as shown in FIG. 16, the battery bundling method further includes:
S60. operating the locking mechanism 43 to unlock the second limiting mechanism 422 so that the second limiting mechanism 422 releases the second grip surface 10b; and
S70. disposing a second strap around the battery 10, where the second strap passes through the second grip surface 10b.

In this way, the bundling of the corresponding battery 10 is completed and the bundling of a next battery 10 may start.

Although this application has been described with reference to exemplary embodiments, various improvements may be made to the embodiments without departing from the scope of this application, and the components of this application may be replaced with equivalents. Particularly, to the extent that no structural conflict exists, various technical features mentioned in various embodiments may be combined in any manner. This application is not limited to the specific embodiments disclosed herein, but includes all technical solutions falling within the scope of the claims.

## Claims

1. A battery positioning apparatus, configured to grip a battery, wherein the battery comprises a first grip surface and a second grip surface, projections of the first grip surface and the second grip surface along a first direction do not overlap, the first direction is perpendicular to the first grip surface and the second grip surface, and the battery positioning apparatus comprises:
a pallet, configured to hold the battery; and
a limiting mechanism, disposed on the pallet, and configured to release the first grip surface of the battery when the second grip surface of the battery is gripped along the first direction.

2. The battery positioning apparatus according to claim 1, wherein the limiting mechanism comprises:
a first limiting mechanism, configured to grip the first grip surface of the battery along the first direction; and
a second limiting mechanism, configured to grip the second grip surface of the battery along the first direction, and configured to be able to grip the second grip surface when the first limiting mechanism releases the first grip surface.

3. The battery positioning apparatus according to claim 2, wherein the battery positioning apparatus further comprises a locking mechanism, and the locking mechanism is configured to lock the second limiting mechanism so that the second limiting mechanism keeps a state of gripping the second grip surface.

4. The battery positioning apparatus according to claim 3, wherein the second limiting mechanism comprises a locking portion;
the locking mechanism comprises:
a limiting rack, configured to fit the locking portion to limit a displacement of a second position limiter along the first direction; and
a lock driving assembly, configured to drive the limiting rack to move along a direction toward or away from the second limiting mechanism so that the limiting rack is in fit with or out of fit with the locking portion.

5. The battery positioning apparatus according to claim 4, wherein the lock driving assembly comprises:
a first fixing piece;
a first elastomer, connected to the first fixing piece and the limiting rack; and
a driving cylinder, configured to drive the limiting rack to move toward the second position limiter and cause the first elastomer to deform to store elastic potential energy.

6. The battery positioning apparatus according to any one of claims 3 to 5, wherein
the first limiting mechanism comprises a first position limiter and a position limiter driving assembly, the first position limiter is configured to grip the first grip surface, and the position limiter driving assembly is configured to drive the first position limiter to move along the first direction; and
the second limiting mechanism is disposed on a side of the first position limiter, the side being close to the battery; and the first position limiter drives at least a part of the second limiting mechanism to move along the first direction so that the second limiting mechanism grips the second grip surface.

7. The battery positioning apparatus according to claim 6, wherein the second limiting mechanism comprises a second position limiter, a second elastomer, and a second fixing piece, and the second elastomer is connected to the second position limiter and the second fixing piece; and
the first position limiter is configured to drive the second position limiter to move along the first direction and drive the second elastomer to deform to store elastic potential energy.

8. The battery positioning apparatus according to claim 6 or 7, wherein the position limiter driving assembly comprises a lead screw and a nut seat that fit each other, the lead screw is connected to the first position limiter, and the lead screw is configured to rotate relative to the nut seat and cause the first position limiter to move along the first direction.

9. The battery positioning apparatus according to claim 8, wherein a helix angle of the lead screw is less than a static friction angle.

10. The battery positioning apparatus according to any one of claims 1 to 9, wherein the pallet comprises a movable supporting piece disposed at an edge of the pallet, and the movable supporting piece is able to move at least along the first direction to vacate a space of the movable supporting piece, the space being opposite to the battery along a direction perpendicular to the first direction.

11. The battery positioning apparatus according to claim 10, wherein the movable supporting piece comprises two supporting subsegments disposed along the first direction; and
the battery positioning apparatus further comprises an opening mechanism connected to the supporting subsegments, and the opening mechanism is configured to drive the two supporting subsegments to move toward each other or away from each other along the first direction.

12. The battery positioning apparatus according to any one of claims 1 to 11, wherein the battery positioning apparatus further comprises a shaping pressurizing mechanism, the shaping pressurizing mechanism is configured to grip the battery along a third direction, the third direction is perpendicular to the first direction and perpendicular to a second direction, and the battery is placed in the pallet along the second direction.

13. A battery positioning method, employing the battery positioning apparatus according to any one of claims 1 to 12, wherein the battery positioning method comprises:
placing the battery in the pallet;
operating the limiting mechanism to grip the first grip surface and the second grip surface of the battery along the first direction; and
operating the limiting mechanism to release the first grip surface.

14. The battery positioning method according to claim 13, wherein the battery positioning method further comprises:
disposing a first strap around the battery, wherein the first strap passes through the first grip surface.

15. The battery positioning method according to claim 14, wherein the limiting mechanism comprises a first limiting mechanism and a second limiting mechanism, the first limiting mechanism is configured to grip the first grip surface along the first direction, and the second limiting mechanism is configured to grip the second grip surface along the first direction; and
the step of operating the limiting mechanism to grip the first grip surface and the second grip surface of the battery along the first direction specifically comprises:
operating the first limiting mechanism to grip the first grip surface along the first direction and operating the second limiting mechanism to grip the second grip surface; and/or
the step of operating the limiting mechanism to release the first grip surface comprises:
operating the first limiting mechanism to move so that the first limiting mechanism releases the first grip surface.

16. The battery positioning method according to claim 15, wherein the battery positioning apparatus further comprises a locking mechanism, and the locking mechanism is configured to lock the second limiting mechanism so that the second limiting mechanism keeps a state of gripping the second grip surface; and
before the step of operating the first limiting mechanism to move so that the first limiting mechanism releases the first grip surface, the battery positioning method further comprises:
operating the locking mechanism to lock the second limiting mechanism.

17. The battery positioning method according to claim 16, wherein the battery positioning method further comprises:
operating the locking mechanism to unlock the second limiting mechanism so that the second limiting mechanism releases the second grip surface; and
disposing a second strap around the battery, wherein the second strap passes through the second grip surface.
